# EUROPÄISCHE PATENTSCHRIFT

(11) **EP 3 567 193 B1**
(45) Veröffentlichungstag und Bekanntmachung des Hinweises auf die Patenterteilung: **08.06.2022**
(21) Anmeldenummer: 19172290.9
(22) Anmeldetag: 02.05.2019
(51) Int. Cl.: E05B 45/00, E05B 47/00, E05B 67/06, B62H 5/00, E05B 71/00, B62H 5/20, B62M 6/90, B62J 45/20, E05B 47/06

(54) **MOBILES SCHLOSS**
MOBILE LOCK
SERRURE MOBILE

(30) Priorität: 11.05.2018 DE 102018111296
(43) Veröffentlichungstag der Anmeldung: 13.11.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 3 010 791
- CH-A2- 702 459
- DE-A1-102012 100 110
- DE-A1-102013 013 087
- DE-A1-102015 119 187
- DE-U1-202016 002 087
- DE-U1-202016 002 367
- US-A1- 2014 360 232
- US-B1- 8 875 550

## Beschreibung

Die Erfindung betrifft ein Schließsystem eines Fahrrads, insbesondere E-Bikes, mit einem Bordcomputer, wobei das Schließsystem ein mobiles Schloss und ein mobiles Endgerät umfasst. Unter einem mobilen Schloss wird in diesem Kontext jede Art von Schloss verstanden, das von dem Fahrrad abgenommen werden kann, wie beispielsweise ein Hangschloss, Bügelschloss oder Kabelschloss. Darüber hinaus umfassen mobile Schlösser in diesem Kontext auch Rahmenschlösser oder Batteriefachschlösser, welche an Fahrrädern angebracht sind. Derartige mobile Schlösser sind grundsätzlich bekannt.

Die DE 20 2016 002 087 U offenbart ein elektronisches Fahrradschloss mit einem mittels eines Elektromotors betätigbaren Schließelement. Das Fahrradschloss weist einen ID-Reader als Authentifizierungsmodul auf, der nach Betätigung eines Schalters für begrenzte Zeit mit Strom versorgt wird um eine Authentifizierung eines passenden ID-Keys zu ermöglichen.

Ein elektronisches Schließsystem gemäß DE 20 2016 002 367 U1 umfasst eine Schließeinheit und eine elektronischen Steuereinheit mit einem mittels eines Schalters aktivierbaren Kommunikationsmodul für den drahtlosen Empfang eines Zugangscodes, wobei die Steuereinheit bei Empfang eines korrekten Zugangscodes die Schließeinheit elektronisch betätigt.

Aus der CH 702 459 A2 ist eine ferngesteuerte Diebstahlsicherung für ein Fahrrad bekannt, die eine Aktivierung und Deaktivierung von am Fahrrad montierten Radschlössern oder eines Stahlseilschlosses mittels Betätigung einer Taste an einem mobilen Steuergerät vorsieht.

DE 10 2015 119 187 A1 offenbart eine Verriegelungsvorrichtung für ein Mobilgerät mit einem beweglichen Sperrmittel, wobei das Mobilgerät nach einer positiven Authentifizierung durch einen Nutzer ein Freigabesignal an das Sperrmittel sendet. Das Mobilgerät kann auch ein Bordcomputer sein.

Aus der EP 3 010 791 B1 ist ein Fahrradsystem bekannt, das einen Prozessor, einen Smartphonehalter und ein Verriegelungssystem aufweist, wobei der Smartphonehalter dazu konfigurierbar ist, ein Smartphone aufzunehmen und das Smartphone mit dem Prozessor zu verbinden und wobei das Verriegelungssystem von dem Prozessor steuerbar ist.

Der Erfindung liegt die Aufgabe zugrunde, die Nutzung eines mobilen Schlosses eines Fahrrads komfortabler zu gestalten.

Zur Lösung der Aufgabe ist ein Schließsystem mit den Merkmalen des Anspruchs 1 vorgesehen.

Das mobile Schloss des erfindungsgemäßen Schließsystems umfasst einen Entriegelungsmotor, ein Authentifizierungsmodul zur Authentifizierung eines Nutzers des Schlosses und ein durch den Nutzer betätigbares Betätigungselement, mittels welchem bei erfolgreicher Authentifizierung des Nutzers der Entriegelungsmotor zur Entriegelung des Schlosses aktivierbar ist.

Der Erfindung liegt der Gedanke zugrunde, das Schloss nicht wie herkömmlicherweise üblich mittels eines Schlüssels zu entriegeln, sondern stattdessen einen durch den Nutzer aktivierbaren Entriegelungsmotor vorzusehen. Es handelt sich bei dem Schloss also um ein elektronisches Schloss.

Damit sichergestellt ist, dass ausschließlich ein berechtigter Nutzer das Schloss entriegeln kann, weist dieses außerdem ein Authentifizierungsmodul zur Authentifizierung des Nutzers auf. Auf diese Weise braucht der Nutzer zur Entriegelung des Schlosses keinen physischen Schlüssel mehr mit sich zu führen, wodurch nicht nur der Nutzungskomfort erhöht ist, sondern gleichzeitig auch das Risiko eines Verlusts oder Diebstahls des Schlüssels wegfällt.

Idealerweise erfolgt die Authentifizierung des Nutzers für diesen unbemerkt im Hintergrund. Um bei erfolgreicher Authentifizierung des Nutzers eine unbeabsichtigte Entriegelung des Schlosses zu verhindern, beispielsweise wenn der Nutzer sich innerhalb einer die Authentifizierung ermöglichenden Entfernung zum Schloss befindet, er aber keine Absicht hegt, das Schloss zu entriegeln, muss der Nutzer im Fall einer tatsächlich gewünschten Entriegelung des Schlosses daher noch eine bewusste Handlung durchführen, in dem er das Betätigungselement betätigt.

Erfindungsgemäß ist das Authentifizierungsmodul durch Anbringen eines Bordcomputers an einem Fahrrad aktivierbar. Dabei bildet der Bordcomputer selbst das Betätigungselement, das heißt an dem Schloss braucht kein zusätzliches Betätigungselement vorgesehen zu werden. Dies erweist sich als besonders vorteilhaft, wenn es sich bei dem Schloss um ein Rahmenschloss oder ein Batteriefachschloss eines E-Bikes handelt, bei welchem der Nutzer den Bordcomputer beim Verlassen des E-Bikes üblicherweise abnimmt und mit sich führt.

Es versteht sich, dass nicht nur die Entriegelung des Schlosses bei erfolgreicher Nutzerauthentifizierung und Betätigung des Betätigungselements möglich ist, sondern auf die gleiche Weise auch eine Verriegelung des Schlosses vorstellbar ist. Vorteilhafte Ausbildungen der Erfindung sind den Unteransprüchen, der Beschreibung und der Zeichnung zu entnehmen.

Um die Authentifizierung des Nutzers für diesen unbemerkt im Hintergrund durchführen zu können, erfolgt die Authentifizierung bevorzugt drahtlos. Der Nutzer braucht also ein die Authentifizierung ermöglichendes mobiles Endgerät, welches er zur Authentifizierung bei sich trägt, wie beispielsweise eine Fernbedienung, ein Smartphone oder eine Smartwatch, zu Authentifizierungszwecken nicht extra hervor zu holen, sondern kann dieses zum Beispiel in seiner Tasche lassen.

Insbesondere wenn das Schloss nicht an die Traktionsbatterie eines E-Bikes oder Elektrorollers angeschlossen ist, beispielsweise wenn es sich bei dem Schloss um ein abnehmbares Bügelschloss, Hangschloss, Kabelschloss oder um ein Rahmenschloss eines herkömmlichen Zweirads handelt, wird eine Ausführungsform bevorzugt, bei welcher das Authentifizierungsmodul durch Betätigen des Betätigungselements aktivierbar ist. Auf diese Weise kann das Authentifizierungsmodul nach Beendigung eines Authentifizierungs- bzw. Entriegelungsvorgangs in einen keine Energie verbrauchenden Ruhezustand versetzt werden, um einen Energiespeicher des Schlosses zu schonen. Erst durch Betätigen des Betätigungselements, insbesondere Anbringen eines Bordcomputers an einem Fahrrad, wird das Authentifizierungsmodul gewissermaßen wieder aufgeweckt, um eine Paarung mit einem gegebenenfalls in der Nähe befindlichen mobilen Endgerät des Nutzers vorzunehmen und einen Authentifizierungsvorgang durchzuführen. In Abhängigkeit davon, wie schnell das Aufwecken des Authentifizierungsmoduls, die Paarung von Authentifizierungsmodul und mobilem Endgerät und die eigentliche Authentifizierung erfolgt, wird das Schloss in diesem Fall erst mit einer gewissen Zeitverzögerung nach Betätigen des Betätigungselements entriegelt.

Vorteilhafterweise umfasst das Authentifizierungsmodul eine Sende/Empfangseinheit, um eine drahtlose Verbindung mit einem mobilen Endgerät des Nutzers herzustellen. Bei dem mobilen Endgerät kann es sich um eine dem Schloss zugeordnete Fernbedienung handeln oder auch um einen tragbaren Computer, welchen der Nutzer normalerweise ohnehin bei sich führt, beispielsweise ein Smartphone, eine Smartwatch oder ein Tablet.

Bei der drahtlosen Verbindung handelt es sich bevorzugt um eine Bluetooth-Verbindung. Bluetooth-Verbindungen haben sich insbesondere hinsichtlich Reichweite und Universalität bewährt.

Das Betätigungselement kann durch Berührung oder auch berührungslos betätigbar sein.

In jedem Fall kann die Kommunikation zwischen dem Bordcomputer und dem Schloss drahtlos, insbesondere via Bluetooth, oder drahtgebunden, insbesondere über eine am Fahrrad befestigte Halterung für den Bordcomputer, erfolgen. Gemäß noch einer weiteren Ausführungsform umfasst das Schloss einen Sensor zur Detektion einer Bewegung des Schlosses und ein mit dem Sensor und dem Authentifizierungsmodul verbundenes Alarmmodul, welches im Falle einer durch den Sensor detektierten Bewegung des Schlosses und nichterfolgreicher Nutzerauthentifizierung einen, insbesondere akustischen, Alarm ausgibt. Durch eine derartige Alarmfunktion wird der Diebstahlschutz erheblich erhöht.

Der Entriegelungsmotor ist vorzugsweise ein Elektromotor. Es versteht sich, dass das mobile Schloss bevorzugt über einen Energiespeicher zur Versorgung des Entriegelungsmotors, des Authentifizierungsmoduls und gegebenenfalls des Betätigungselements mit Energie verfügt. So kann es sich bei dem Energiespeicher beispielsweise um eine Batterie oder einen Akkumulator handeln.

Die Erfindung betrifft ein Schließsystem mit einem mobilen Schloss der voranstehend beschriebenen Art und einem mobilen Endgerät, mittels welchem sich ein Nutzer des Schlosses an diesem authentisieren kann. Die voranstehend im Zusammenhang mit dem mobilen Schloss genannten Vorteile gelten für das erfindungsgemäße Schließsystem entsprechend.

Damit das mobile Endgerät mit dem Authentifizierungsmodul des Schlosses kommunizieren kann, umfasst vorteilhafterweise auch das mobile Endgerät eine Sende/Empfangseinheit, um eine drahtlose Verbindung mit dem Authentifizierungsmodul des Schlosses herzustellen.

Wie bereits erwähnt kann das mobile Endgerät eine Fernbedienung oder ein tragbarer Computer sein, insbesondere eine Smartwatch, ein Smartphone, ein Tablet etc.

Gemäß einer Ausführungsform weist das mobile Endgerät einen Energiespeicher auf, durch welchen das Schloss zumindest mit für eine Notentriegelung ausreichender Energie versorgbar ist. Auf diese Weise kann das Schloss auch dann noch entriegelt werden, wenn es selbst vollständig strom- bzw. spannungslos sein sollte, beispielsweise weil eine Batterie des Schlosses defekt ist oder der Nutzer versäumt hat, einen Akkumulator des Schlosses rechtzeitig aufzuladen. Der Energiespeicher des mobilen Endgeräts stellt mit anderen Worten also eine Notstrom-/spannungsversorgung sicher.

Zur Realisierung einer solchen Notstrom-/spannungsversorgung weisen das Schloss und das mobile Endgerät bevorzugt komplementäre Anschlusselemente auf, mittels welchen das mobile Endgerät zur Versorgung des Schlosses mit Energie an dieses anschließbar ist.

Die Anschlusselemente können beispielsweise einen USB-Stecker und eine USB-Buchse umfassen.

Insbesondere wenn es sich bei dem mobilen Endgerät um eine dem Schloss zugeordnete Fernbedienung handelt, kann das Anschlusselement des mobilen Endgeräts zwischen einer Passivlage, in welcher es in einem Gehäuse des mobilen Endgeräts geschützt ist, und einer Aktivlage bewegbar sein, in welcher es zumindest teilweise aus dem Gehäuse herausragt und mit dem Anschlusselement des Schlosses koppelbar ist.

Weiterer Gegenstand ist ein Verfahren zum Entriegeln oder Verriegeln eines mobilen Schlosses eines Fahrrads, insbesondere E-Bikes, mit einem Bordcomputer, wobei das mobile Schloss einen Entriegelungsmotor, ein Authentifizierungsmodul und ein durch einen Nutzer betätigbares Betätigungselement aufweist, welches durch den Bordcomputer gebildet wird, bei welchem Verfahren das Authentifizierungsmodul durch Anbringen eines Bordcomputers an dem Fahrrad aktiviert wird, mittels des Authentifizierungsmoduls eine Authentifizierung des Nutzers durchgeführt wird, indem dieser sich mittels eines mobilen Endgeräts an dem Schloss authentisiert, und im Falle einer erfolgreichen Authentifizierung des Nutzers und zusätzlicher Betätigung des Betätigungselements der Entriegelungsmotor zur Entriegelung des Schlosses aktiviert wird. Durch das erfindungsgemäße Verfahren lassen sich die voranstehend aufgeführten Vorteile entsprechend erreichen.

Wie bereits erwähnt erfolgt die Authentifizierung des Nutzers vorteilhafterweise drahtlos und insbesondere über eine Bluetooth-Verbindung zwischen dem Authentifizierungsmodul und dem mobilen Endgerät des Nutzers.

Gemäß einer energieeffizienten Ausführungsform wird das Authentifizierungsmodul durch die Betätigung des Betätigungselements aktiviert und die Authentifizierung des Nutzers erst nach der Betätigung des Betätigungselements durchgeführt. In diesem Fall kann das Authentifizierungsmodul normalerweise einen energiesparenden Ruhezustand einnehmen und lediglich zur Durchführung eines Authentifizierungsvorgangs aufgeweckt werden.

Nachfolgend werden beispielhafte Ausführungsformen unter Bezugnahme auf die beigefügte Zeichnung erläutert, die dem Verständnis der Erfindung, deren Umfang durch die beigefügten Ansprüche bestimmt ist, dienen sollen. Es zeigen:
- Fig. 1: eine schematische Darstellung eines Schließsystems gemäß einer ersten Ausführungsform;
- Fig. 2A: Draufsicht auf eine Fernbedienung des Schließsystems von Fig. 1;
- Fig. 2B: Frontansicht der Fernbedienung von Fig. 2A;
- Fig. 2C: Seitenansicht der Fernbedienung von Fig. 2A mit ausgefahrenem Anschlusselement;
- Fig. 2D: Seitenansicht der Fernbedienung von Fig. 2A mit eingefahrenem Anschlusselement;
- Fig. 3: eine schematische Darstellung eines Schließsystems gemäß einer zweiten Ausführungsform; und
- Fig. 4: eine schematische Darstellung eines Schließsystems gemäß einer dritten Ausführungsform.

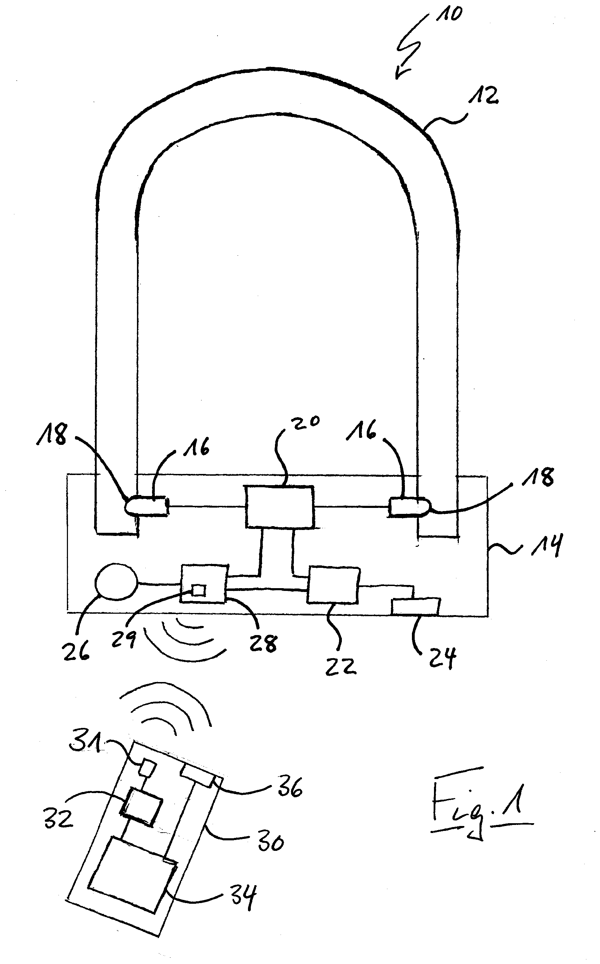

Das in Fig.1 dargestellte Schließsystem umfasst ein mobiles Schloss 10 in Form eines Bügelschlosses, mit einem U-förmigen Schließbügel 12, dessen Enden in einem verriegelten Zustand des Schlosses 10 in einem Schlosskörper 14 aufgenommen und darin verriegelt sind.

Die Verriegelung des Schließbügels 12 in dem Schlosskörper 14 erfolgt mittels in dem Schlosskörper 14 beweglich gelagerten Verriegelungselementen 16, welche in entsprechende Verriegelungsvertiefungen 18 des Schließbügels 12 eingreifen und dadurch verhindern, dass der Schließbügel 12 aus dem Schlosskörper 14 herausgezogen werden kann.

Zur Entriegelung des Schlosses 10 können die Verriegelungselemente 16 mittels eines in dem Schlosskörper 14 angeordneten Entriegelungsmotors 20, hier in Form eines Elektromotors, aus den Verriegelungsvertiefungen 18 gelöst werden, beispielsweise entgegen der Rückstellkraft nicht dargestellter Verriegelungsfedern, welche die Verriegelungselemente in Richtung der Verriegelungsvertiefungen 18 vorspannen.

Da die Verriegelung des Schließbügels 12 in dem Schlosskörper 14 durch die Verriegelungsfedern bewirkt wird, welche die Verriegelungselemente 16 in die Verriegelungsvertiefungen 18 verlagern, und der Entriegelungsmotor 20 letztlich nur für die Entriegelung des Schlosses 10 sorgt, wird das Schloss 10 auch als ein halbautomatisches Schloss 10 bezeichnet. Vorstellbar ist grundsätzlich aber auch ein vollautomatisches Schloss 10, bei welchem der Entriegelungsmotor 20 sowohl für die Entriegelung als auch für die Verriegelung sorgt.

Zur Energieversorgung des Elektromotors 20 ist ein Energiespeicher 22 in dem Schlosskörper 14 untergebracht. Im vorliegenden Ausführungsbeispiel handelt es sich bei dem Energiespeicher 22 um einen Akkumulator, welcher mittels eines von außen zugänglichen Anschlusselements, hier in Form einer USB-Buchse, aufladbar ist. Alternativ könnte es sich bei dem Energiespeicher 22 aber auch um eine Batterie handeln, welche bei Bedarf ausgewechselt werden kann.

Zur Auslösung eines Entriegelungsvorgangs ist ein für den Nutzer zugängliches Betätigungselement 26 an dem Schlosskörper 14 vorgesehen, welches im vorliegenden Ausführungsbeispiel in Form einer kapazitiv wirkenden Sensorfläche ausgebildet ist. Alternativ könnte es sich bei dem Betätigungselement 26 aber auch um eine optisch oder induktiv wirkende Schaltfläche oder um einen Drehknopf, Druckknopf, Kippschalter oder Schiebeschalter handeln. Ferner ist es vorstellbar, das Betätigungselement 26 in Form eines Bewegungssensors auszubilden. Die Betätigung des Betätigungselements 26 würde in diesem Fall durch eine Bewegung des Schlosses 10 erfolgen.

Das Betätigungselement 26 ist mit einem in dem Schlosskörper 14 untergebrachten Authentifizierungsmodul 28 verbunden, welches seinerseits mit dem Elektromotor 20 verbunden ist. Durch Betätigung des Betätigungselements 26 wird das Authentifizierungsmodul 28 aktiviert, so dass das Authentifizierungsmodul 28 einen Authentifizierungsvorgang durchführt. Hierzu stellt das Authentifizierungsmodul 28 mittels einer Sende/Empfangseinheit 29 zunächst eine Bluetooth-Verbindung zu einem mobilen Endgerät 30 her, welches ein Nutzer des Schlosses 10 zu diesem Zweck bei sich führt.

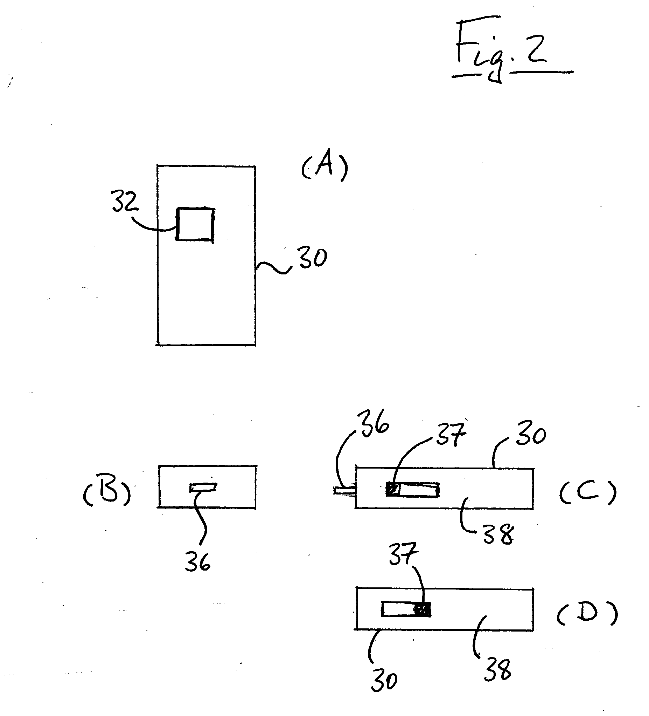

Im vorliegenden Ausführungsbeispiel handelt es sich bei dem mobilen Endgerät 30 um eine Bluetooth-fähige Fernbedienung (siehe auch Fig. 2), welche ihrerseits eine Sende/Empfangseinheit 31 aufweist und mittels eines Einschaltelements 32 eingeschaltet werden kann. Die Fernbedienung kann auch einen nicht dargestellten Bewegungssensor, beispielsweise einen 3D-Lagesensor, zur Detektion einer Bewegung der Fernbedienung aufweisen, welcher es ermöglicht, die Fernbedienung bei Detektion einer Bewegung aufzuwecken, nachdem diese nach ihrer Benutzung in einen energiesparenden Ruhezustand übergegangen ist.

Alternativ könnte das mobile Endgerät 30 aber auch durch eine Smartwatch, ein Smartphone oder einen anderen Bluetooth-fähigen tragbaren Computer gebildet sein.

Sobald das Authentifizierungsmodul 28 eine Bluetooth-Verbindung zu dem mobilen Endgerät 30 hergestellt hat, führt es eine Authentifizierung des mobilen Endgeräts 30 durch. Im Falle einer positiven Authentifizierung sendet das Authentifizierungsmodul 28 ein Freigabesignal an den Elektromotor 20, damit dieser zur Entriegelung des Schlosses 10 die Verriegelungselemente 16 und den Schließbügel 12 außer Eingriff bringen kann.

Wird das mobile Endgerät 30 hingegen nicht positiv authentifiziert, so sendet das Authentifizierungsmodul 28 kein Freigabesignal an den Entriegelungsmotor 20, d.h. das Schloss 10 wird nicht entriegelt und kann somit durch den Nutzer nicht geöffnet werden. Ist das Betätigungselement 26 in Form eines Bewegungssensors ausgebildet, so kann das Authentifizierungsmodul 28 mit einem nicht dargestellten Alarmmodul verbunden sein, welches zum Schutz vor Diebstahl im Falle einer detektierten Bewegung des Schlosses 10 und eines nichterfolgreichen Authentifizierungsvorgangs einen, insbesondere akustischen, Alarm ausgibt.

Es versteht sich, dass sowohl der Authentifizierungsvorgang als auch der eigentliche Entriegelungsvorgang voraussetzen, dass der Energiespeicher 22 über ausreichend Energie verfügt. Für den Fall, dass der Energiespeicher 22 derart entladen ist, dass eine Authentifizierung und/oder Entriegelung nicht mehr möglich ist, verfügt das mobile Endgerät 30 über einen Notenergiespeicher 34, beispielsweise in Form einer Powerbank, und ein zu dem Anschlusselement 24 des Schlosses 10 komplementäres Anschlusselement 36, hier in Form eines USB-Steckers, um den Notenergiespeicher 34 des mobilen Endgeräts 30 an das Anschlusselement 24 des Schlosses 10 anzuschließen und den Energiespeicher 22 des Schlosses 10 zumindest so weit aufzuladen, dass die Authentifizierung durchgeführt und das Schloss 10 entriegelt werden kann.

Zum Schutz des Anschlusselements 36 des mobilen Endgeräts 30 vor Verschmutzung und/oder Beschädigung kann das Anschlusselement 36 mittels eines Schiebers 37 in ein Gehäuse 38 des mobilen Endgeräts 30 eingefahren (Fig. 2D) und bei Bedarf aus diesem herausgefahren werden (Fig. 2C).

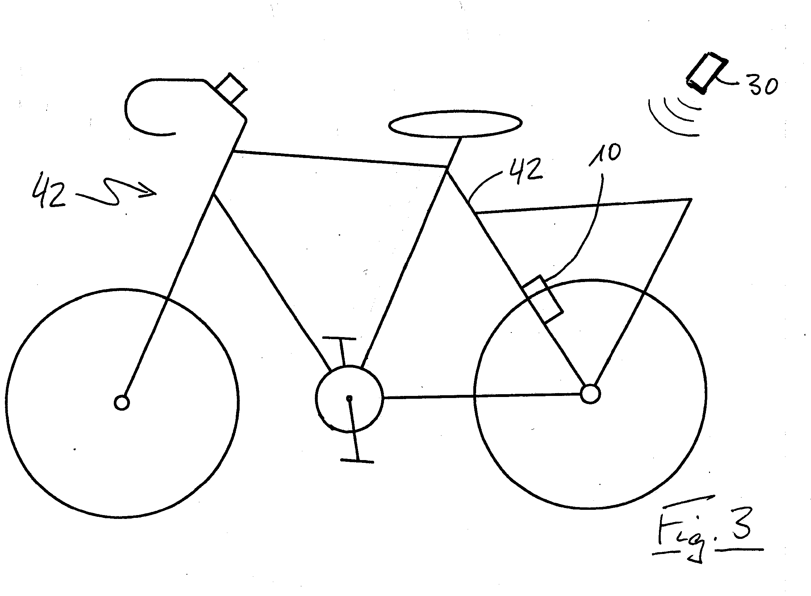

In Fig. 3 ist eine zweite Ausführungsform des Schließsystems dargestellt, welche sich von der voranstehend beschriebenen ersten Ausführungsform lediglich darin unterscheidet, dass es sich bei dem mobilen Schloss 10 hier nicht um ein Bügelschloss, sondern um ein an einem Rahmen 40 eines Fahrrads 42 angebrachtes Rahmenschloss handelt. Auch dieses Rahmenschloss verfügt über einen Schlosskörper und einen in dem Schlosskörper verriegelbaren Schließbügel, welcher mittels eines Elektromotors entriegelbar ist, wobei die Entriegelung des Schließbügels in voranstehend beschriebener Weise eine positive Authentifizierung eines mobilen Endgeräts 30 nach Betätigung eines Betätigungselements des Schlosses 10 voraussetzt.

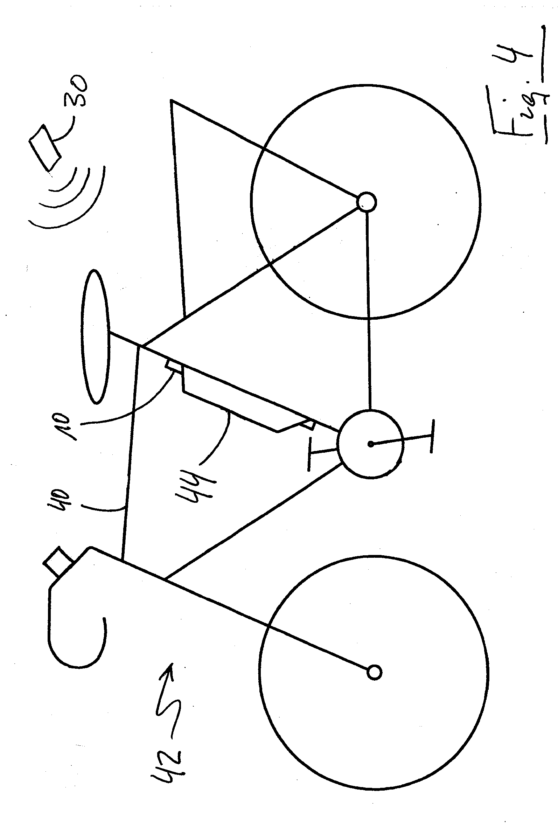

In Fig. 4 ist eine dritte Ausführungsform eines Schließsystems dargestellt, welche sich von der anhand von Fig. 1 beschriebenen ersten Ausführungsform darin unterscheidet, dass es sich bei dem Schloss 10 nicht um ein Bügelschloss, sondern um ein Batteriefachschloss handelt, welches an einem Rahmen 40 eines Fahrrads 42 angebracht ist und zur Sicherung einer Traktionsbatterie 44 des Fahrrads 42 dient. Insofern weist dieses Schloss 10 keinen Schließbügel auf, sondern stattdessen einen nicht näher dargestellten Riegel zur Sicherung der in dem Batteriefach aufgenommenen Traktionsbatterie 44, welcher durch einen Elektromotor des Schlosses in eine Freigabelage zur Freigabe der Traktionsbatterie 44 bringbar ist, sobald nach Betätigung eines Betätigungselements des Schlosses 10 in voranstehend beschriebener Weise eine positive Authentifizierung eines mobilen Endgeräts 30 stattgefunden hat.

Es versteht sich, dass ein Fahrrad 42 auch sowohl mit einem Rahmenschloss 10 von Fig. 3 als auch mit einem Batteriefachschloss 10 von Fig. 4 ausgerüstet sein kann. In diesem Fall ist es vorteilhaft, wenn sich beide Schlösser 10 mit ein- und demselben mobilen Endgerät 30 entriegeln lassen. Grundsätzlich ist es aber auch vorstellbar, separate mobile Endgeräte 30 zur Entriegelung des Rahmenschlosses 10 einerseits und des Batteriefachschlosses 10 andererseits vorzusehen.

Des Weiteren versteht es sich, dass, wenn es sich bei dem Fahrrad 42 um ein E-Bike handelt, dass Batteriefachschloss 10 und/oder das Rahmenschloss 10 nicht notwendigerweise über einen eigenen Energiespeicher 22 verfügen müssen, sondern zur Energieversorgung stattdessen an die Traktionsbatterie 44 des Fahrrads 42 angeschlossen sein können.

### Bezugszeichenliste

- 10: Schloss
- 12: Schließbügel
- 14: Schlosskörper
- 16: Verriegelungselement
- 18: Verriegelungsvertiefung
- 20: Entriegelungsmotor
- 22: Energiespeicher
- 24: Anschlusselement
- 26: Betätigungselement
- 28: Authentifizierungsmodul
- 29: Sende/Empfangseinheit
- 30: mobiles Endgerät
- 31: Sende/Empfangseinheit
- 32: Einschaltelement
- 34: Notenergiespeicher
- 36: Anschlusselement
- 37: Schieber
- 38: Gehäuse
- 40: Rahmen
- 42: Fahrrad
- 44: Traktionsbatterie

## Patentansprüche

1. Schließsystem eines Fahrrads, insbesondere E-Bikes, mit einem Bordcomputer, umfassend ein
mobiles Schloss (10) mit einem Entriegelungsmotor (20), einem Authentifizierungsmodul (28) zur Authentifizierung eines Nutzers des Schlosses (10) und einem durch den Nutzer betätigbaren Betätigungselement (26), mittels welchem bei erfolgreicher Authentifizierung des Nutzers der Entriegelungsmotor (20) zur Entriegelung des Schlosses (10) aktivierbar ist, und
ein mobiles Endgerät (30), mittels welchem sich ein Nutzer des Schlosses (10) an diesem authentisieren kann,
**dadurch gekennzeichnet, dass**
der Bordcomputer selbst das Betätigungselement (26) bildet und dass das Authentifizierungsmodul (28) durch Anbringen des Bordcomputers an dem Fahrrad aktivierbar ist.

2. Schließsystem nach Anspruch 1,
**dadurch gekennzeichnet, dass**
die Authentifizierung drahtlos erfolgt; und/oder
das Authentifizierungsmodul (28) eine Sende/Empfangseinheit (29) umfasst, um eine drahtlose Verbindung mit dem mobilen Endgerät (30) des Nutzers herzustellen, insbesondere wobei die drahtlose Verbindung eine Bluetooth-Verbindung ist.

3. Schließsystem nach Anspruch 1 oder 2,
**dadurch gekennzeichnet, dass**
das Authentifizierungsmodul (28) durch Betätigen des Betätigungselements (26) aktivierbar ist; und/oder
das Betätigungselement (26) durch Berührung oder berührungslos betätigbar ist.

4. Schließsystem nach zumindest einem der vorstehenden Ansprüche,
**gekennzeichnet durch**
einen Sensor zur Detektion einer Bewegung des Schlosses (10) und ein mit dem Sensor und dem Authentifizierungsmodul verbundenes Alarmmodul, welches im Falle einer durch den Sensor detektierten Bewegung des Schlosses (10) und nichterfolgreicher Nutzerauthentifizierung einen, insbesondere akustischen, Alarm ausgibt.

5. Schließsystem nach zumindest einem der vorstehenden Ansprüche,
**dadurch gekennzeichnet, dass**
das mobile Endgerät (30) eine Sende/Empfangseinheit (31) umfasst, um eine drahtlose Verbindung mit dem Authentifizierungsmodul (28) des Schlosses (10) herzustellen.

6. Schließsystem nach zumindest einem der vorstehenden Ansprüche,
**dadurch gekennzeichnet, dass**
das mobile Endgerät (30) einen Energiespeicher (34) aufweist, durch welchen das Schloss (10) mit zumindest für eine Notentriegelung ausreichender Energie versorgbar ist.

7. Schließsystem nach zumindest einem der vorstehenden Ansprüche,
**dadurch gekennzeichnet, dass**
das Schloss (10) und das mobile Endgerät (30) komplementäre Anschlusselemente (24, 36) aufweisen, mittels welchen das mobile Endgerät (30) zur Versorgung des Schlosses (10) mit Energie an dieses anschließbar ist, insbesondere wobei die Anschlusselemente (24, 36) einen USB-Stecker und eine USB-Buchse umfassen.

8. Schließsystem nach Anspruch 7,
**dadurch gekennzeichnet, dass**
das Anschlusselement (36) des mobilen Endgeräts (30) zwischen einer Passivlage, in welcher es in einem Gehäuse (38) des mobilen Endgeräts (30) geschützt ist, und einer Aktivlage bewegbar ist, in welcher es zumindest teilweise aus dem Gehäuse (38) herausragt und mit dem Anschlusselement (24) des Schlosses (10) koppelbar ist.

9. Verfahren zum Entriegeln eines mobilen Schlosses (10) eines Fahrrads, insbesondere E-Bikes, mit einem Bordcomputer, wobei das mobile Schloss (10) einen Entriegelungsmotor (20), ein Authentifizierungsmodul (10) und ein durch einen Nutzer betätigbares Betätigungselement (26) aufweist, welches durch den Bordcomputer gebildet wird, bei welchem Verfahren
das Authentifizierungsmodul (28) durch Anbringen des Bordcomputers an dem Fahrrad aktiviert wird,
mittels des Authentifizierungsmoduls (28) eine Authentifizierung des Nutzers durchgeführt wird, indem dieser sich mittels eines mobilen Endgeräts (30) an dem Schloss (10) authentisiert und
im Falle einer erfolgreichen Authentifizierung des Nutzers der Entriegelungsmotor (20) zur Entriegelung des Schlosses (10) aktiviert wird.

10. Verfahren nach Anspruch 9,
**dadurch gekennzeichnet, dass**
die Authentifizierung des Nutzers drahtlos und insbesondere über eine Bluetooth-Verbindung zwischen dem Authentifizierungsmodul (28) und dem mobilen Endgerät (30) des Nutzers erfolgt; und/oder
das Authentifizierungsmodul (28) durch die Betätigung des Betätigungselements (26) aktiviert wird und die Authentifizierung des Nutzers erst nach der Betätigung des Betätigungselements (26) durchgeführt wird.

## Claims

1. A locking system of a bicycle, in particular an e-bike, comprising an onboard computer, said locking system comprising
a portable lock (10) having an unlocking motor (20), an authentication module (28) for authenticating a user of the lock (10) and an actuation element (26) which can be actuated by the user (28) and by means of which the unlocking motor (20) can be activated to unlock the lock (10) on a successful authentication of the user; and
a mobile end device (30) by means of which a user of the lock (10) can authenticate himself thereat,
**characterized in that**
the onboard computer itself forms the actuation element (26); and **in that** the authentication module (28) can be activated by attaching the onboard computer to the bicycle.

2. A locking system in accordance with claim 1,
**characterized in that**
the authentication takes place wirelessly; and/or
**in that** the authentication module (28) comprises a transmission/reception unit (29) to establish a wireless connection to the mobile end device (30) of the user, in particular with the wireless connection being a Bluetooth connection.

3. A locking system in accordance with claim 1 or claim 2,
**characterized in that**
the authentication module (28) can be activated by actuating the actuation element (26); and/or
**in that** the actuation element (26) can be actuated by contact or contactlessly.

4. A locking system in accordance with at least one of the preceding claims,
**characterized by**
a sensor for detecting a movement of the lock (10) and an alarm module which is connected to the sensor and to the authentication module and which outputs an alarm, in particular an acoustic alarm, in the event of a movement of the lock (10) detected by the sensor and of an unsuccessful user authentication.

5. A locking system in accordance with at least one of the preceding claims,
**characterized in that**
the mobile end device (30) comprises a transmission/reception unit (31) to establish a wireless connection to the authentication module (28) of the lock (10).

6. A locking system in accordance with at least one of the preceding claims,
**characterized in that**
the mobile end device (30) has an energy store (34) by which the lock (10) can be supplied with at least sufficient energy for an emergency unlocking.

7. A locking system in accordance with at least one of the preceding claims,
**characterized in that**
the lock (10) and the mobile end device (30) have complementary connector elements (24, 36) by means of which the mobile end device (30) can be connected to the lock (10) to supply the lock (10) with energy, in particular with the connector elements (24, 36) comprising a USB plug and a USB socket.

8. A locking system in accordance with claim 7,
**characterized in that**
the connector element (36) of the mobile end device (30) is movable between a passive position in which it is protected in a housing (38) of the mobile end device (30) and an active position in which it at least partly projects out of the housing (38) and is couplable to the connector element (24) of the lock (10).

9. A method of unlocking a portable lock (10) of a bicycle, in particular an e-bike, comprising an onboard computer, wherein the portable lock (10) has an unlocking motor (20), an authentication module (28) and an actuation element (26) which can be actuated by a user and which is formed by the onboard computer, in which method
the authentication module is activated by attaching the onboard computer to the bicycle;
an authentication of the user is carried out by means of the authentication module (28) in that the user authenticates himself at the lock (10) by means of a mobile end device (30); and
in the event of a successful authentication of the user, the unlocking motor (20) is activated to unlock the lock (10).

10. A method in accordance with claim 9,
**characterized in that**
the authentication of the user takes place wirelessly and in particular via a Bluetooth connection between the authentication module (28) and the mobile end device (30) of the user; and/or
**in that** the authentication module (28) is activated by the actuation of the actuation element (26) and the authentication of the user is only carried out after the actuation of the actuation element (26).

## Revendications

1. Système de fermeture pour un vélo, en particulier un vélo à assistance électrique, pourvu d'un ordinateur de bord, comportant un antivol mobile (10) comprenant un moteur de déverrouillage (20), un module d'authentification (28) authentifier un utilisateur de l'antivol (10) et un élément d'actionnement (26) pouvant être actionné par l'utilisateur et permettant, en cas d'authentification réussie de l'utilisateur, d'activer le moteur de déverrouillage (20) pour déverrouiller l'antivol (10), et
un terminal mobile (30) permettant à un utilisateur de l'antivol (10) de s'authentifier sur celui-ci,
**caractérisé en ce que**
l'ordinateur de bord constitue lui-même l'élément d'actionnement (26), et **en ce que** le module d'authentification (28) peut être activé par mise en place de l'ordinateur de bord sur le vélo.

2. Système de fermeture selon la revendication 1,
**caractérisé en ce que**
l'authentification se fait sans fil ; et/ou
le module d'authentification (28) comprend une unité d'émission/réception (29) pour établir une connexion sans fil avec le terminal mobile (30) de l'utilisateur, en particulier la connexion sans fil étant une connexion Bluetooth.

3. Système de fermeture selon la revendication 1 ou 2,
**caractérisé en ce que**
le module d'authentification (28) peut être activé par actionnement de l'élément d'actionnement (26) ; et/ou
l'élément d'actionnement (26) peut être actionné par contact manuel ou sans contact manuel.

4. Système de fermeture selon l'une au moins des revendications précédentes,
**caractérisé par**
un capteur pour la détection d'un mouvement de l'antivol (10) et un module d'alarme relié au capteur et au module d'authentification, qui émet une alarme, en particulier acoustique, en cas de mouvement de l'antivol (10) détecté par le capteur et en cas d'authentification non réussie de l'utilisateur.

5. Système de fermeture selon l'une au moins des revendications précédentes,
**caractérisé en ce que**
le terminal mobile (30) comprend une unité d'émission/réception (31) pour établir une connexion sans fil avec le module d'authentification (28) de l'antivol (10).

6. Système de fermeture selon l'une au moins des revendications précédentes,
**caractérisé en ce que**
le terminal mobile (30) présente un accumulateur d'énergie (34) permettant d'alimenter l'antivol (10) avec une énergie suffisante au moins pour un déverrouillage d'urgence.

7. Système de fermeture selon l'une au moins des revendications précédentes,
**caractérisé en ce que**
l'antivol (10) et le terminal mobile (30) présentent des éléments de raccordement complémentaires (24, 36) au moyen desquels le terminal mobile (30) peut être raccordé à l'antivol (10) pour l'alimenter en énergie, en particulier les éléments de raccordement (24, 36) comprenant une fiche USB et une prise USB.

8. Système de fermeture selon la revendication 7,
**caractérisé en ce que**
l'élément de raccordement (36) du terminal mobile (30) peut être déplacé entre une position passive, dans laquelle il est protégé dans un boîtier (38) du terminal mobile (30), et une position active, dans laquelle il fait saillie au moins partiellement hors du boîtier (38) et peut être couplé à l'élément de raccordement (24) de l'antivol (10).

9. Procédé de déverrouillage d'un antivol mobile (10) pour un vélo, en particulier un vélo à assistance électrique, pourvu d'un ordinateur de bord, l'antivol mobile (10) comprenant un moteur de déverrouillage (20), un module d'authentification (10) et un élément d'actionnement (26) pouvant être actionné par un utilisateur et constitué par l'ordinateur de bord,
procédé dans lequel
le module d'authentification (28) est activé par mise en place de l'ordinateur de bord sur le vélo,
au moyen du module d'authentification (28), une authentification de l'utilisateur est effectuée du fait que celui s'authentifie sur l'antivol (10) au moyen d'un terminal mobil (30), et
en cas de réussite de l'authentification de l'utilisateur, le moteur de déverrouillage (20) est activé pour déverrouiller l'antivol (10).

10. Procédé selon la revendication 9,
**caractérisé en ce que**
l'authentification de l'utilisateur se fait sans fil et en particulier par une connexion Bluetooth entre le module d'authentification (28) et le terminal mobile (30) de l'utilisateur; et/ou
le module d'authentification (28) est activé par l'actionnement de l'élément d'actionnement (26) et l'authentification de l'utilisateur ne se fait qu'après l'actionnement de l'élément d'actionnement (26).
